# EUROPÄISCHE PATENTSCHRIFT

(11) **EP 1 795 440 B1**
(45) Veröffentlichungstag und Bekanntmachung des Hinweises auf die Patenterteilung: **15.10.2008**
(21) Anmeldenummer: 07001786.8
(22) Anmeldetag: 06.08.2004
(51) Int. Cl.: B62J 13/04, B62J 13/00

(54) **Schutzmantel zum Schutz der Antriebskette eines Fahrrades**
Protective cover to protect the chain of a bicycle
Manteau de protection destiné à la protection de la chaîne d'entraînement d'un vélo

(43) Veröffentlichungstag der Anmeldung: 13.06.2007
(62) Teilanmeldung aus: 04018665.2
(73) Patentinhaber: Hebie GmbH & Co.KG, 33617 Bielefeld (DE)
(72) Erfinder: Michel, Klaus, 33818 Leopoldshöhe (DE); Kobzan, Michael, 14052 Berlin (DE)
(74) Vertreter: Grünecker, Kinkeldey, Stockmair & Schwanhäusser Anwaltssozietät

(56) Entgegenhaltungen:
- CH-A- 179 633
- DE-A- 3 629 463
- DE-C- 93 621
- FR-A- 958 995
- GB-A- 189 704 057

## Beschreibung

Die vorliegende Erfindung betrifft einen an einem Antriebsritzel eines Fahrrades angebrachten Schutzmantel zum Schutz des das Antriebsritzel umschließenden Bereiches einer Antriebskette. Aus der DE 3629463 ist ein Kettenschutzmantel mit den Merkmalen des Oberbegriffes des Anspruchs 1 bekannt.

Eine ungeschützte Antriebskette eines Fahrrades ist während der Fahrt der Gefahr der Verschmutzung ausgesetzt. Der von den Laufrädern eines Fahrrades hochgeschleuderte Fahrbahnschmutz haftet an der gefetteten oder geölten Oberfläche der Kettenglieder und vermischt sich dort mit dem Öl oder Fett zu einer Art Schmirgelpaste und wird schließlich von den Zähnen des Antriebsritzels wie auch das Abtriebsritzels in die Gelenke der Kettenglieder getrieben. Durch die Schmirgelwirkung werden die Gelenke einer Fahrradkette derart geschwächt, dass sich die Lebensdauer einer Antriebskette drastisch verringert.

Antriebsketten bei Fahrrädern mit Nabengangschaltungen, die im Gegensatz zu Kettengangschaltungen ihre Kettenlinie beim Gangwechsel nicht ändern, also immer auf denselben Ritzeln bleiben, lassen sich relativ gut durch einen Kettenschutz vor Verschmutzung schützen.

Solche Kettenschützer gibt es bereits in unterschiedlichsten Ausführungen.

Die bislang fortschrittlichsten unter den bekannten Kettenschützern schützen die Antriebskette vollständig umlaufend. Diese Kettenschützer bestehen aus einer Verkleidung für das Kettenblatt des Tretlagers, welches im folgenden als Antriebsritzel bezeichnet wird, einer Verkleidung für das Abtriebsritzel des hinteren Laufrades und aus zwei Schutzrohren, welche mit den Verkleidungen verbunden sind und die den jeweils vom Antriebsritzel zum Abtriebsritzel verlaufenden Bereich der Antriebskette schützen. Die Verkleidungen selbst sind jeweils aus zwei Gehäusehälften zusammengesetzt. Derartige Kettenschützer stellen also eine aufwendige und teure Konstruktion dar, bedingen einen hohe Montageaufwand und müssen zusätzlich im Bereich des Antriebsritzels mittels einer geeigneten Haltevorrichtung am Fahrradrahmen festgelegt werden. Das hohe Gewicht eines derartigen Kettenschützers wirkt sich selbstverständlich auch negativ auf das Gesamtgewicht eines damit ausgestatteten Fahrrades aus.

Ein weiterer Nachteil solcher Kettenschützer besteht darin, dass die im Bereich des Tretlagers vorgesehene Verkleidung besonders von der Pedalseite her schlagempfindlich ist. Ein Schlag auf die Verkleidung kann die Haltevorrichtung des Kettenschützers unter Umständen so verbiegen, dass die Verkleidung gegen Antriebskette angepresst wird, was zu einer starken Störung des Fahrbetriebes führt.

Aufgabe der Erfindung ist es, einen Schutzmantel der gattungsgemäßen Art aufzuzeigen, der einfach herstellbar und montierbar ist, einen wirksamen Schutz der Antriebskette am Antriebsritzel gewährleistet und ein geringes Gewicht aufweist.

Diese Aufgabe wird durch die Merkmale des kennzeichnenden Teils des Anspruches 1 gelöst.

Weitere Merkmale der Erfindung sind Gegenstand weiterer Unteransprüche.

Ausführungsbeispiele der Erfindung sind in den beigefügten Zeichnungen dargestellt und werden im folgenden näher beschrieben. Es zeigen:
- Fig. 1: eine Ansicht eines erfindungsgemäßen Schutzmantels im Bereich des vorderen Antriebsritzels eines Fahrrades montiert;
- Fig. 2: einen Teilschnitt nach der Linie II-II in Figur 1;
- Fig. 3: einen Teilschnitt nach der Linie III-III in Figur 1;
- Fig. 4: eine perspektivische Sprengbilddarstellung des Schutzmantels nach Figur 1;
- Fig. 5: eine der Figur 4 entsprechende Sprengbilddarstellung in einer anderen Perspektiv-Ansicht;
- Fig. 6: eine perspektivische Darstellung des Schutzmantels im montierten Zustand;
- Fig. 7: eine perspektivische Darstellung eines Schutzmantels nach einem weiteren Ausführungsbeispiel der Erfindung;
- Fig. 8: eine Ansicht des Schutzmantels gemäss Figur 7;
- Fig. 9: eine Ansicht in Richtung des Pfeiles IX in Figur 8;
- Fig. 10: eine perspektivische Sprengbilddarstellung des hinteren Teilbereiches des Schutzmantels nach den Figuren 7 bis 9;
- Fig. 11: eine perspektivische Darstellung des hinteren Bereiches des Schutzmantels gemäss Figur 10 im montierten Zustand, und
- Fig. 12: eine Ansicht des hinteren Bereiches des Schutzmantels kurz vor der Verbindung mit dem vorderen Bereich des Schutzmantels.

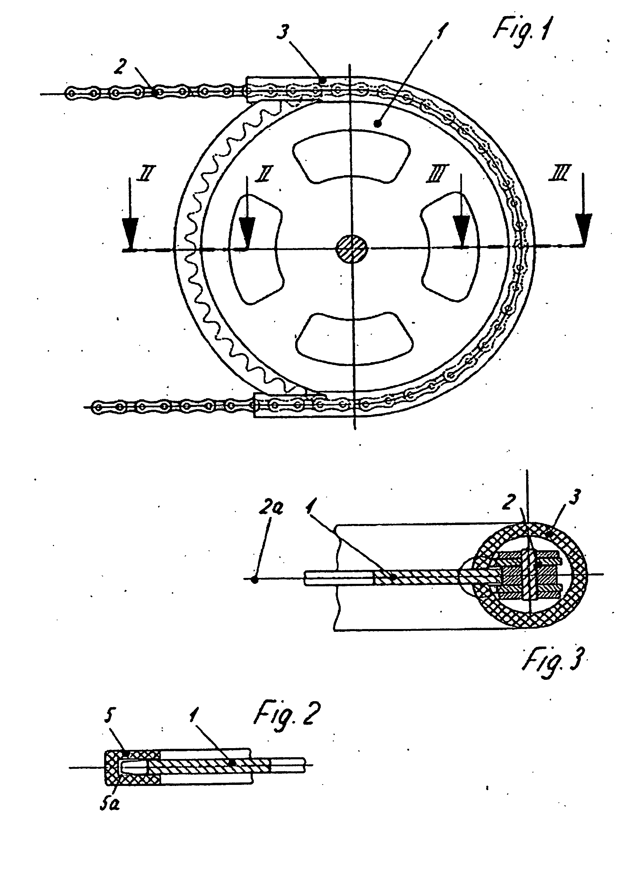

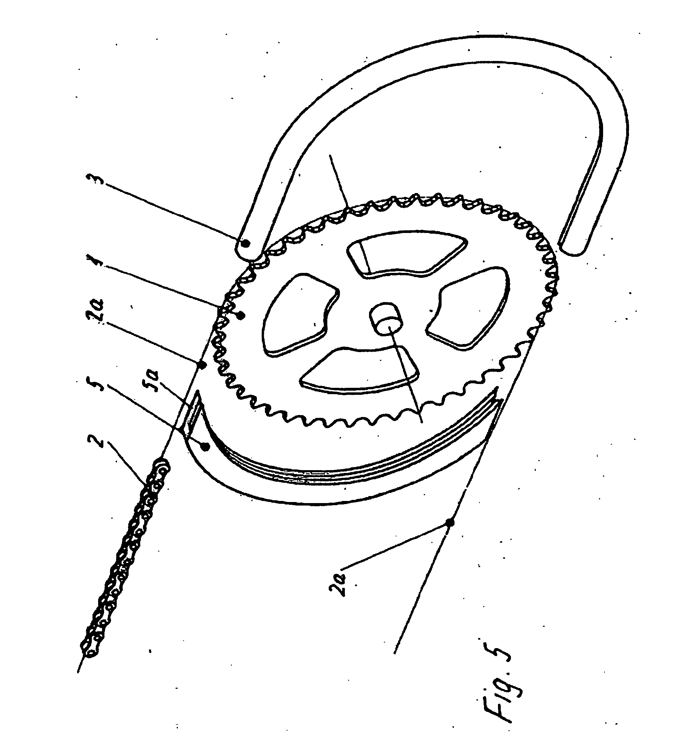

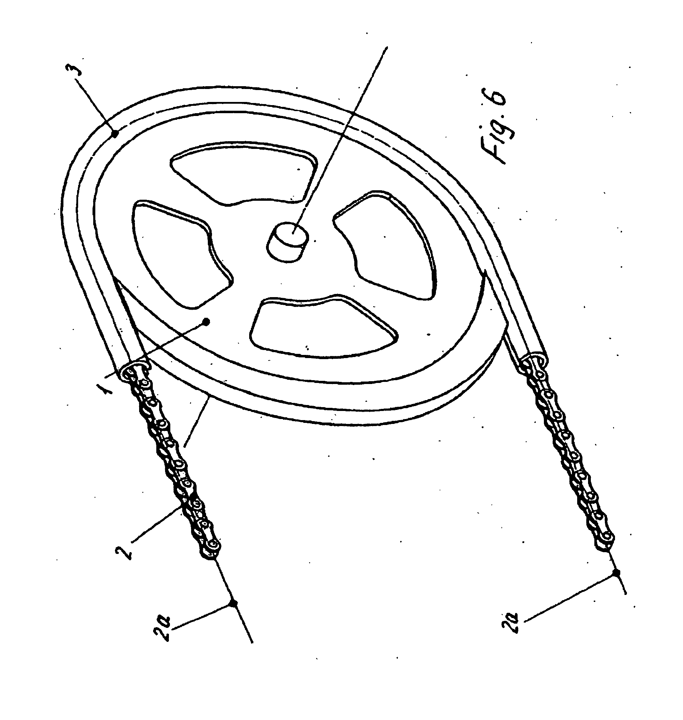

Bei dem in den Figuren 1 bis 6 gezeigten Ausführungsbeispiel der Erfindung ist zum Schutz eines Antriebsritzels 1 sowie einer dieses Antriebsritzel 1 teilweise umschlingenden Antriebskette 2 ein Schutzmantel 3 vorgesehen, welcher relativ zum Antriebsritzel 1 sowie zur Antriebskette 2 als stationär anzusehen ist.

Im dargestellten Ausführungsbeispiel ist der Schutzmantel 3, was besonders die Figur 3 sehr deutlich zeigt, kreisrund ausgebildet. Selbstverständlich kann der Schutzmantel 3 aber auch andere Querschnittsformen aufweisen.

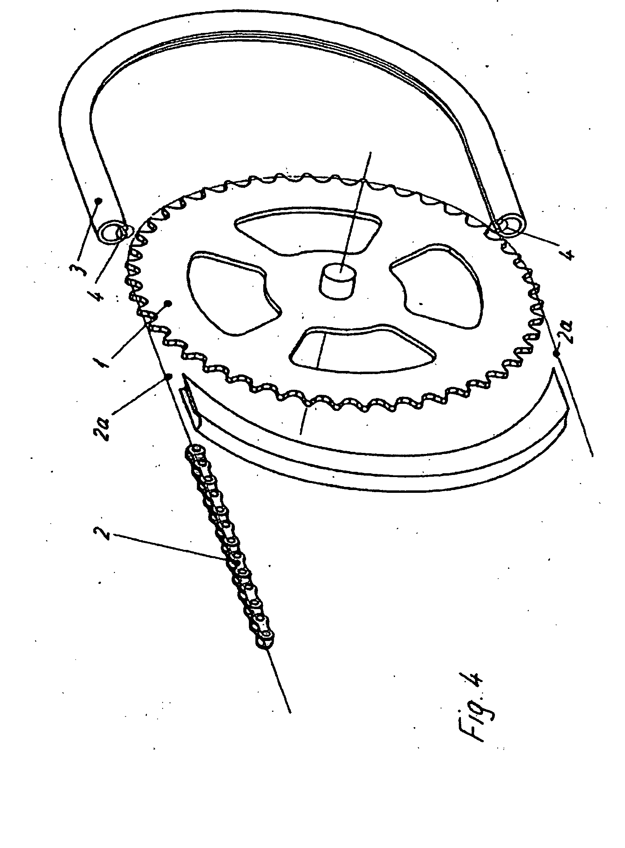

Wie insbesondere aus Figur 4 hervorgeht, ist der Schutzmantel 3 längs seiner inneren Mantellinie mit einer Öffnung 4 versehen, durch welche das Antriebsritzel 1 in das Innere des Schutzmantels 3 hindurchtritt.

Durch den Schutzmantel 3 ist somit der von der Antriebskette 2 umschlossene Bereich des Antriebsritzel 1 sowie selbstverständlich der dort liegende Bereich der Antriebskette 2 gegen Verschmutzung geschützt. Der Schutzmantel 3 liegt dabei selbsthaltend und zentrierend teils am Antriebsritzel 1 und teils an der Antriebskette 2 an.

Der Schutzmantel 3 kann gegenüber der dargestellten Ausführungsform in Richtung der Kettenlinie 2a in Richtung eines Hinterrades eines Fahrrades verlängert sein und entsprechend den größten Bereich der Antriebskette 2 schützend umschließen.

Als zusätzlicher Schutz für den Bereich des Antriebsritzels 1, der außerhalb des Umschlingungsbereiches der Antriebskette 2 liegt, ist eine zusätzliche Verkleidung 5 vorgesehen. Diese Verkleidung 5 schließt sich sowohl an den oberen wie auch den unteren Bereich des Schutzmantels 3 an. Die Verkleidung 5 weist im Bereich ihrer dem Antriebsritzel 1 zugewandten Mantellinie eine Nut 5a auf, die hinsichtlich ihrer Breite der Stärke des Antriebsritzels 1 angepasst ist. Die Verkleidung 5 liegt somit am Antriebsritzel 1 an und wird durch dieses zentriert.

Die Verkleidung 5 kann vorteilhafterweise durch Verbindung mit dem Schutzmantel 3 gesichert sein.

Weniger elegant kann die Verkleidung 5 aber auch am Fahrradrahmen fixiert werden.

Die Montage des Schutzmantels 3 kann je nach Konstruktion des Schutzmantels 3 auf verschiedene Weisen erfolgen.

Besteht der Schutzmantel 3 beispielsweise aus einem steifen Material, so muss er vor der Montage der Antriebskette 2 auf das Antriebsritzel 1 aufgeschoben werden.

Danach wird die noch offene Antriebskette 2 durch eines der Enden des Schutzmantels 3 hindurchgeführt, vom Antriebsritzel 1 aufgenommen und durch Drehen des Antriebsritzels 1 aus dem anderen Ende des Schutzmantels 3 wieder herausgeführt.

Besteht der Schutzmantel 3 aus einem weichen oder biegsamen Material, zum Beispiel aus Weich-PVC, Polyethylen oder dergleichen, so kann die Antriebskette 2 bereits am Antriebsritzel 1 montiert sein und durch Aufspreizen der Öffnung 4 kann der Schutzmantel 3 über die Antriebskette 2 auf das Antriebsritzel 1 geschoben werden.

Zur noch einfacheren Montage des Schutzmantels 3 kann dieser aber auch geteilt angefertigt und am Antriebsritzel 1 über die Antriebskette 2 zusammengebaut werden.

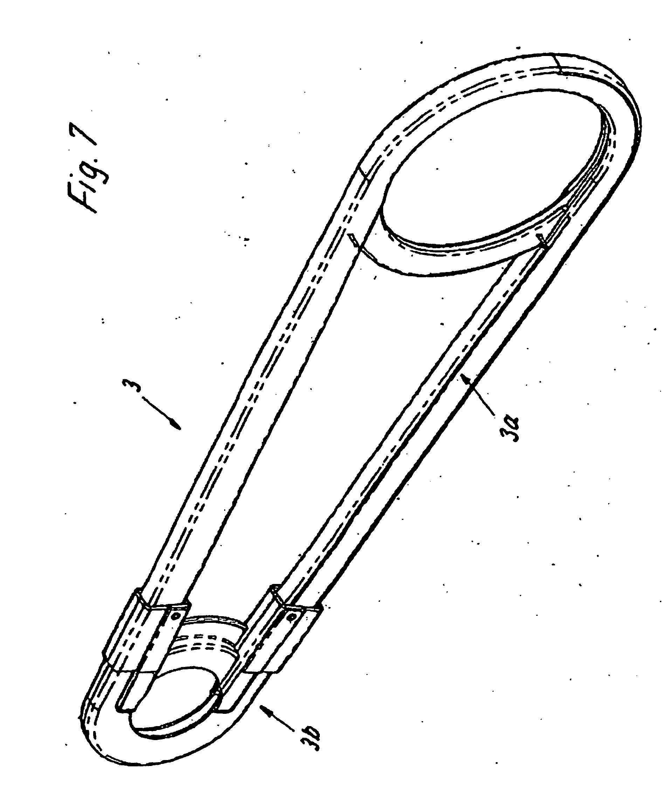

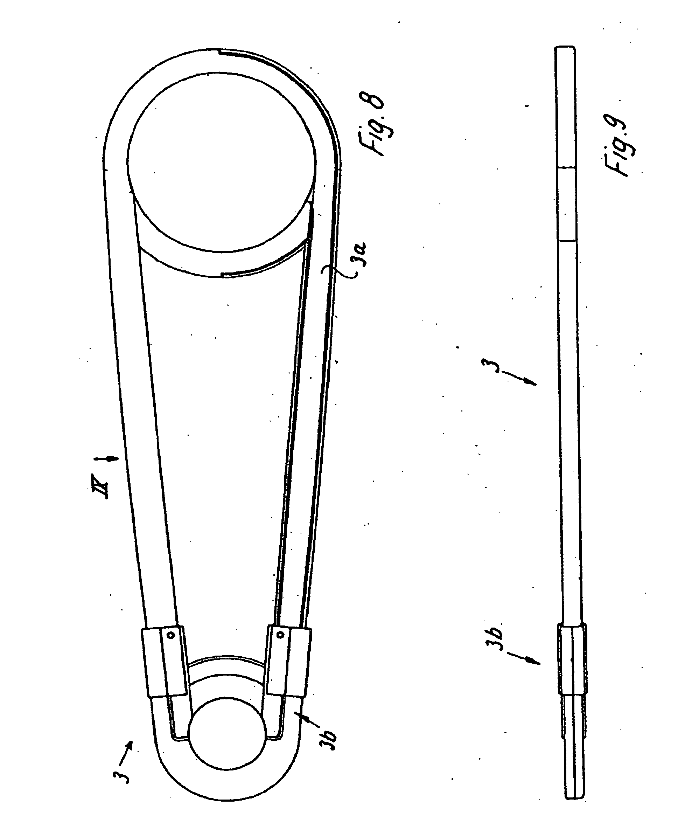

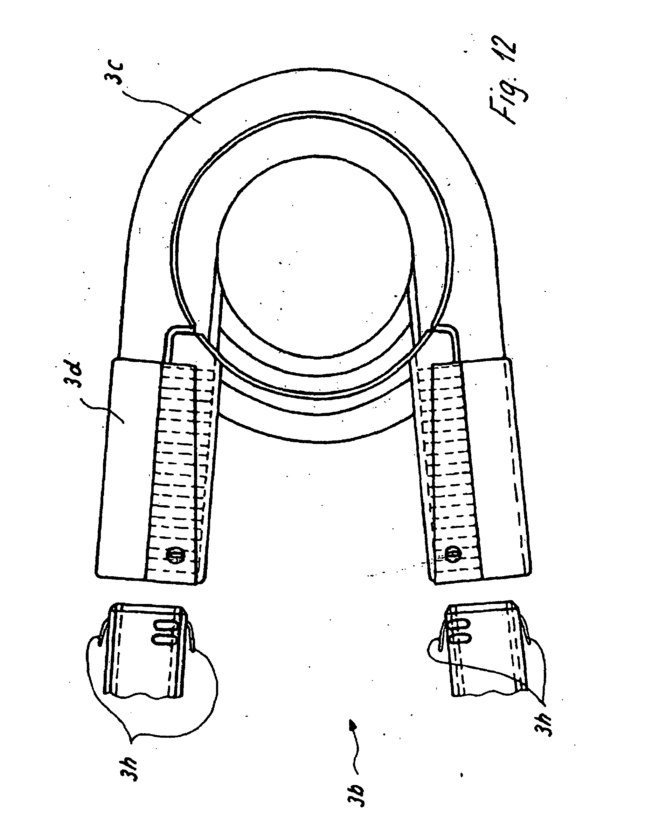

In den Figuren 7 bis 12 ist ein Ausführungsbeispiel der Erfindung gezeigt, bei dem der Schutzmantel 3 aus einem vorderen Bereich 3a und einem hinteren Endbereich 3b besteht. Der vordere Bereich 3a des Schutzmantels 3 ist dabei zum Schutz des Antriebsritzels 1 und zum Schutz der über das Antriebsritzel 1 hinaus verlaufenden Abschnitte einer Antriebskette vorgesehen. Dieser vordere Bereich 3a besteht aus in Längsrichtung der Kette geteilten, baugleichen Hälften, die klemmend miteinander verbunden sind.

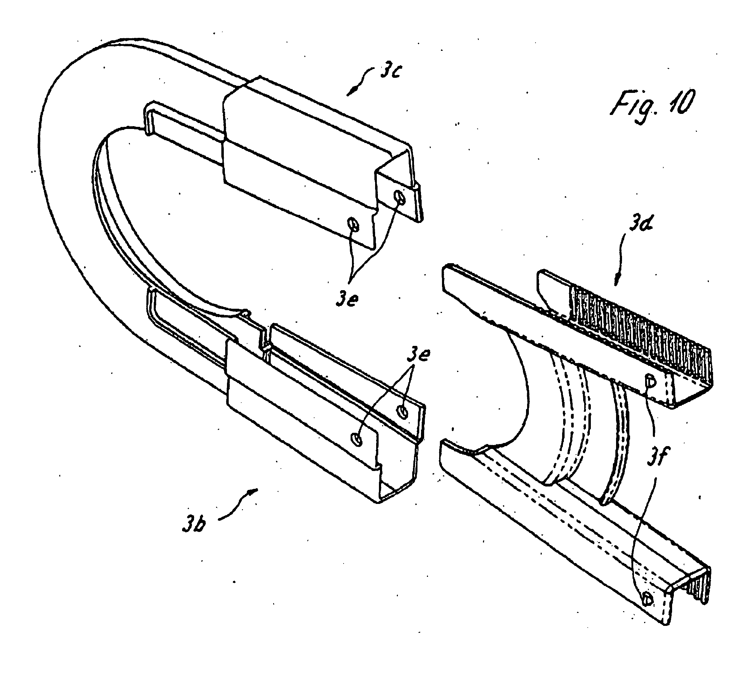

Der hintere Endbereich 3b des Schutzmantels 3 besteht aus zwei Zusatzteilen 3c und 3d, wie sich den Figuren 10 bis 12 ohne weiteres entnehmen lässt.

Dabei dient das bogenförmig ausgebildete Zusatzteil 3c zum Schutz eines hinteren Abtriebsritzels in dem von einer Antriebskette 2 umschlungenen Bereich. Das weitere Zusatzteil 3d, welches mit dem Zusatzteil 3c vorzugsweise rastend verbindbar ist, dient zur Überdeckung des nicht von der Antriebskette 2 umschlungenen Bereiches eines hinteren Abtriebsritzels.

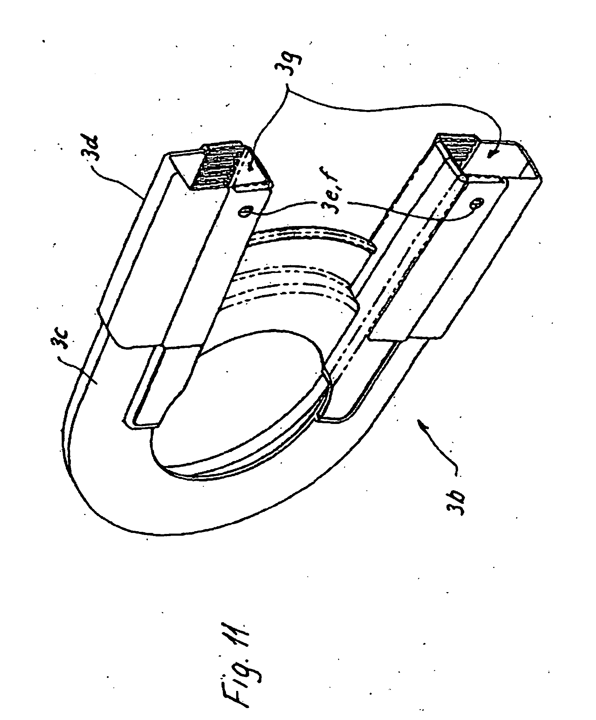

Wie die Figuren 10 und 11 deutlich zeigen, ist das Zusatzteil 3c mit Rastaussparungen 3e versehen, in welche im montierten Zustand Rastnocken 3f einrasten. Dadurch ergibt sich eine formschlüssige Verbindung zwischen den beiden Zusatzteilen 3c und 3d.

Die beiden Zusatzteile 3c und 3d sind so gestaltet, dass sie im zusammengebauten Zustand in ihren dem vorderen Bereich 3a des Schutzmantels 3 zugewandten Endbereichen Aufnahmekanäle 3g bilden, deren lichter Querschnitt etwa dem äußeren Querschnitt der hinteren Enden des vorderen Bereiches 3a des Schutzmantels 3 entspricht. Damit kann der vordere Bereich 3a des Schutzmantels 3 mit seinen hinteren Enden in diese Aufnahmekanäle 3g eingeschoben und mit den hinteren Zusatzteilen 3c und 3d abschließend verbunden werden. Vorzugsweise ist auch hier eine Rastverbindung vorzusehen, um bei Bedarf eine leichte Demontage dieser Teile zu ermöglichen.

Zu Dichtzwecken können die hinteren Enden des vorderen Bereiches 3a des Schutzmantels 3 mit federnd angeformten Dichtlappen 3h ausgestattet sein, welche dann an entsprechenden Innenwandungen der Aufnahmekanäle 3g abdichtend anliegen können.

Beim Ausführungsbeispiel gemäss den Figuren 7 bis 12 wird also eine vollständige Abdeckung sowohl einer Antriebskette sowie des Antriebsritzels und das Abtriebsritzels eines Fahrrades erreicht. Dabei besteht der Schutzmantel 3 insgesamt aus wenigen, leicht montierbaren Einzelteilen, die vorzugsweise aus einem Kunststoff hergestellt sind. Der gesamte Schutzmantel 3 wird dabei sowohl vom Antriebsritzel wie auch vom Abtriebsritzel und zum Teil von der Antriebskette gehalten und getragen. Vorteilhafterweise sollte der Schutzmantel 3 deshalb aus einem Kunststoff gefertigt sein, der mit den Metallteilen (Antriebsritzel, Abtriebsritzel, Antriebskette) eine besonders reibungsarme Werkstoffpaarung ergibt.

## Patentansprüche

1. An einem Antriebsritzel (1) eines Fahrrades anbringbar ausgestalteter, stationärer Schutzmantel (3), durch den der das Antriebsritzel (1) umschließende, zu schützende Bereich einer Antriebskette aufnehmbar und überdeckbar ist und der mit einer im montierten Zustand vom Antriebsritzel (1) durchtretenen, längs einer inneren Mantellinie des Schutzmantels (3) verlaufenden Öffnung (4) versehen ist, wobei der Schutzmantel (3) im montierten Zustand selbsthaltend auf der Antriebskette (2) gehalten und zentriert ist, **dadurch gekennzeichnet, dass** der Schutzmantel (3) im montierten Zustand teils auf der Antriebskette (2) und teils am Antriebsritzel (3) anliegend gehalten und zentriert ist.

2. Schutzmantel nach Anspruch 1, **dadurch gekennzeichnet, dass** der Schutzmantel (3) in der Mittelebene des Antriebsritzels (1) geteilt und die beiden Schutzmantelhälften, von den einander gegenüberliegenden Seiten des Antriebsritzels (1) ausgehend, zusammengesetzt sind.

3. Schutzmantel nach Anspruch 1 oder 2, **dadurch gekennzeichnet, dass** der Schutzmantel (3) über das Antriebsritzel (1) hinausgehend verlängert ist und somit den oberen wie auch den unteren Trum der Antriebskette (2) schützend einschließt.

4. Schutzmantel nach einem der vorhergehenden Ansprüche, **dadurch gekennzeichnet, dass** der außerhalb des Umschlingungsbereiches der Antriebskette (2) liegende Sektor des Antriebsritzels (1) durch eine mantelartige Verkleidung (5) überdeckt ist.

5. Schutzmantel nach Anspruch 4, **dadurch gekennzeichnet, dass** die Verkleidung (5) mit dem Schutzmantel (3) verbunden oder einstückig mit diesem hergestellt ist.

6. Schutzmantel nach Anspruch 4 oder 5, **dadurch gekennzeichnet, dass** die Verkleidung (5) im montierten Zustand am Antriebsritzel (1) anliegt und durch dieses zentriert ist.

7. Schutzmantel nach einem der Ansprüche 4 bis 6 **dadurch gekennzeichnet, dass** die Verkleidung (5) im Bereich ihrer dem Antriebsritzel (1) zugewandten Mantellinie eine Nut (5a) mit einer an die Stärke des Antriebsritzels (1) angepasste Breite aufweist.

8. Schutzmantel nach einem der vorhergehenden Ansprüche, **dadurch gekennzeichnet, dass** der Schutzmantel (3) im Bereich des hinterradseitigen Abtriebsritzels durch ansteckbare Zusatzteile (3c, 3d) verlängert ist, wobei eines der Zusatzteile (3c) das hintere Abtriebsritzel in dem von der Antriebskette (2) umschlungenen Bereich umhüllt und das andere Zusatzteil (3d) den übrigen Bereich des hinteren Abtriebsritzels überdeckt.

9. Schutzmantel nach Anspruch 8, **dadurch gekennzeichnet, dass** die beiden Zusatzteile (3c, 3d) in ihren dem vorderen Bereich (3a) des Schutzmantels (3) zugewandten Enden Aufnahmekanäle (3g) zur Aufnahme der besagten Enden des vorderen Bereiches (3a) des Schutzmantels (3) bilden.

10. Schutzmantel nach Anspruch 9, **dadurch gekennzeichnet, dass** die in die Aufnahmekanäle (3g) eingeführten Enden des vorderen Bereiches (3a) des Schutzmantels (3) mit federnden Dichtlappen (3h) ausgestattet sind, die sich im montierten Zustand an entsprechenden Innenwandungen der Aufnahmekanäle (3g) dichtend anlegen.

11. Schutzmantel nach einem der vorhergehenden Ansprüche, **dadurch gekennzeichnet, dass** die beiden Zusatzteile (3c, 3d) rastend miteinander verbunden sind.

12. Schutzmantel nach einem der vorhergehenden Ansprüche, **dadurch gekennzeichnet, dass** die hinteren Enden des vorderen Bereiches (3a) des Schutzmantels (3) innerhalb der Aufnahmekanäle (3g) rastend festgelegt sind.

13. Schutzmantel nach einem oder mehreren der vorhergehenden Ansprüche, **dadurch gekennzeichnet, dass** der Schutzmantel (3) aus Kunststoff gefertigt ist, bevorzugt aus einen Kunststoff, der mit der Antriebskette (2) und/oder dem Antriebsritzel (1) und dem Abtriebsritzel eine besonders reibungsarme Werkstoffpaarung ergibt.

## Claims

1. Stationary protective covering (3) which is configured to be installed on a drive sprocket (1) of a bicycle and by which the portion of a drive chain which wraps the drive sprocket (1) and which is to be protected can be accommodated and covered, and which is provided with an opening (4) extending along an inner surface line of the protective covering (3), through which opening (4) the drive sprocket (1) passes in the assembled state, the protective covering (3) being held and centred in a self-retaining manner on the drive chain (2) in the assembled state, **characterised in that** in the assembled state the protective covering (3) is retained and centred resting partly on the drive chain (2) and partly on the drive sprocket (3).

2. Protective covering according to Claim 1, **characterised in that** the protective covering (3) is divided in the centre plane of the drive sprocket (1) and the two halves of the protective covering (3) are assembled together from opposite sides of the drive sprocket (1).

3. Protective covering according to Claim 1 or 2, **characterised in that** the protective covering (3) is prolonged beyond the drive sprocket (1) and thus protectively encloses both the upper and the lower sections of the drive chain (2).

4. Protective covering according to any one of the preceding claims, **characterised in that** the sector of the drive sprocket (1) lying outside the zone wrapped by the drive chain (2) is covered by a jacket-like casing (5).

5. Protective covering according to Claim 4, **characterised in that** the casing (5) is connected to the protective covering (3) or is produced in one piece therewith.

6. Protective covering according to Claim 4 or 5, **characterised in that** in the assembled state the casing (5) rests against the drive sprocket (1) and is centred thereby.

7. Protective covering according to any one of Claims 4 to 6, **characterised in that** the casing (5) has in the region of its surface line facing towards the drive sprocket (1) a groove (5a) having a width adapted to the width of the drive sprocket (1)**.**

8. Protective covering according to any one of the preceding claims, **characterised in that** the protective covering (3) is prolonged in the region of the driven sprocket on the side of the rear wheel by attachable additional parts (3c, 3d), one of the additional parts (3c) enclosing the driven rear sprocket in the zone wrapped by the drive chain (2) and the other additional part (3d) covering the remaining portion of the rear driven sprocket.

9. Protective covering according to Claim 8, **characterised in that** the two additional parts (3c, 3d) have in their ends oriented towards the front portion (3a) of the protective covering (3) retaining channels (3g) for retaining said ends of the front portion (3a) of the protective covering (3).

10. Protective covering according to claim 9, **characterised in that** the ends of the front region (3a) of the protective covering (3) inserted in the retaining channels (3g) are equipped with resilient sealing tabs (3h) which rest sealingly against corresponding inner walls of the retaining channels (3g) in the assembled state.

11. Protective covering according to any one of the preceding claims, **characterised in that** the two additional parts (3c, 3d) are connected to one another in an interlocking manner.

12. Protective covering according to any one of the preceding claims, **characterised in that** the rear ends of the front portion (3a) of the protective covering (3) are fixed in an interlocking manner inside the retaining channels (3g).

13. Protective covering according to one or more of the preceding claims, **characterised in that** the protective covering (3) is made from a plastic material, preferably from a plastic material which forms an especially low-friction material pairing with the drive chain (2) and/or the drive sprocket (1) and the driven sprocket.

## Revendications

1. Manteau de protection (3) fixe conçu pour pouvoir être montée sur un pignon d'entraînement (1) d'une bicyclette, par lequel la zone d'une chaîne d'entraînement à protéger entourant le pignon d'entraînement (1) peut être reçue et recouverte et qui est muni d'une ouverture (4) s'étendant le long d'une génératrice intérieure du manteau de protection (3), traversée par le pignon d'entraînement (1) à l'état monté, le manteau de protection (3) étant automatiquement maintenu et centré sur la chaîne d'entraînement (2) à l'état monté, **caractérisé en ce que** le manteau de protection (3) à l'état monté est maintenu et centré, adjacent en partie à la chaîne d'entraînement (2) et, en partie au pignon d'entraînement (1).

2. Manteau de protection selon la revendication 1, **caractérisé en ce que** le manteau de protection (3) est divisé dans le plan médian du pignon d'entraînement (1) et les deux moitiés du manteau de protection sont assemblées à partir des deux côtés du pignon d'entraînement (1) opposés l'un à l'autre.

3. Manteau de protection selon la revendication 1 ou 2, **caractérisé en ce que** le manteau de protection (3) est prolongé au-delà du pignon d'entraînement (1) et inclut ainsi à la fois le brin supérieur et le brin inférieur de la chaîne d'entraînement (2) de manière à les protéger.

4. Manteau de protection selon l'une quelconque des revendications précédentes, **caractérisé en ce que** le secteur du pignon d'entraînement (1) se trouvant à l'extérieur de la zone d'enroulement de la chaîne d'entraînement (2) est recouvert par un habillage (5) semblable à une enveloppe.

5. Manteau de protection selon la revendication 4, **caractérisé en ce que** l'habillage (5) est raccordé au manteau de protection (3) ou fabriqué d'un seul tenant avec celui-ci.

6. Manteau de protection selon la revendication 4 ou 5, **caractérisé en ce que**, à l'état monté, l'habillage (5) est adjacent au pignon d'entraînement (1) et est centré par celui-ci.

7. Manteau de protection selon l'une quelconque des revendications 4 à 6, **caractérisé en ce que**, dans la zone de sa génératrice dirigée vers le pignon d'entraînement (1), l'habillage (5) comporte une rainure (5a) avec une largeur adaptée à l'épaisseur du pignon d'entraînement (1).

8. Manteau de protection selon l'une quelconque des revendications précédentes, **caractérisé en ce que**, dans la zone du pignon secondaire du côté de la roue arrière, le manteau de protection (3) est prolongé par des pièces additionnelles attachables (3c, 3d), l'une des pièces additionnelles (3c) enveloppant le pignon secondaire arrière dans la zone autour de laquelle s'enroule la chaîne d'entraînement (2) et l'autre pièce additionnelle (3d) recouvrant la zone restante du pignon secondaire arrière.

9. Manteau de protection selon la revendication 8, **caractérisé en ce que**, dans leurs extrémités dirigées vers la zone avant (3a) du manteau de protection (3), les deux pièces additionnelles (3c, 3d) forment des conduits de réception (3g) pour la réception desdites extrémités de la zone avant (3a) du manteau de protection (3).

10. Manteau de protection selon la revendication 9, **caractérisé en ce que** les extrémités de la zone avant (3a) du manteau de protection (3) introduites dans les conduits de réception (3g) sont munies de pattes d'étanchéité élastiques (3h) qui, à l'état monté, s'appuient de manière étanche sur des parois intérieures correspondantes des conduits de réception (3g).

11. Manteau de protection selon l'une quelconque des revendications précédentes, **caractérisé en ce que** les deux pièces additionnelles (3c, 3d) sont raccordées l'une à l'autre par encliquetage.

12. Manteau de protection selon l'une quelconque des revendications précédentes, **caractérisé en ce que** les extrémités arrière de la zone avant (3a) du manteau de protection (3) sont fixées par encliquetage à l'intérieur des conduits de réception (3g).

13. Manteau de protection selon l'une quelconque ou plusieurs des revendications précédentes, **caractérisé en ce que** le manteau de protection (3) est fait en matière plastique, de préférence en une matière plastique qui permet un appariement de matières avec une friction particulièrement faible entre la chaîne d'entraînement (2) et/ou le pignon d'entraînement (1) et le pignon secondaire.
